# FASCICULE DE BREVET EUROPEEN

(11) **EP 0 505 285 B1**
(45) Date de publication et mention de la délivrance du brevet: **30.08.1995**
(21) Numéro de dépôt: 92400760.2
(22) Date de dépôt: 20.03.1992
(51) Int. Cl.: H05H 1/34, B23K 9/29

(54) **Pistolet de découpage de tôle**
Pistole zum Schneiden von Blechplättchen
Gun for cutting out metal blanks

(30) Priorité: 22.03.1991 FR 9103495
(43) Date de publication de la demande: 23.09.1992
(73) Titulaire: LA SOUDURE AUTOGENE FRANCAISE, F-75007 Paris (FR)
(72) Inventeur: Borne, André, F-95550 Bessancourt (FR)
(74) Mandataire: Caen, Thierry Alain

(56) Documents cités:
- EP-A- 0 369 349
- DE-A- 3 612 722
- DE-U- 8 716 041

## Description

L'invention concerne un pistolet de découpage de tôle, du genre comprenant un corps ayant un axe et supportant coaxialement, à une extrémité, une tête de coupe comportant un ensemble porte-électrode s'étendant dans une tuyère comportant un débouché de gaz plasmagène, pour le découpage circulaire de tôle, en particulier la formation de petites découpes autour de points de soudure de deux pièces en tôle, en vue de leur désolidarisation. Cette opération, que l'on désigne communément par "déboutonnage" de tôles soudées par point est actuellement traitée de façon mécanique :
- au burin et au marteau ;
- à la meule ;
- à l'aide d'une fraise spéciale montée sur perceuse.

Aucun de ces moyens ne permet de réaliser proprement et rapidement ce type d'opérations surtout lorsqu'il s'agit de réparation automobile où l'accès aux soudures est délicat.

Dans le premier cas, la découpe manuelle est un procédé pénible et imprécis qui occasionne des déformations de la pièce que l'on souhaite réutiliser. Le meulage, bien que propre, est une opération longue et délicate, car l'outillage est volumineux. Le fraisage nécessite un outillage coûteux, d'utilisation délicate et qui en outre occasionne des déformations de la tôle support.

On connait des torches à plasma pour le découpage voir par example EP-A-0 369 349.

L'invention a été initiée par l'observation selon laquelle le procédé de découpe plasma par air comprimé ou autre gaz a démontré depuis plusieurs années ses avantages dans le domaine de la découpe des tôles fines ou de moyenne épaisseur et l'invention vise donc la mise au point d'un matériel d'application d'un procédé plasma qui permette la découpe de la tôle supérieure d'un assemblage par points sans attaque notable de la tôle support, la tôle supérieure pouvant être nue (sans protection) ou peinte, ce qui est le cas des tôleries automobiles, et a pour objet un outil portatif, léger et maniable, d'usage aisé, n'utilisant pas de source d'énergie autre que celles disponibles dans les petits ateliers (pneumatique ou électrique), et qui est constitué de pièces d'usure simples et peu coûteuses.

Pour ce faire, selon l'invention, le pistolet comprend, dans le corps, des moyens d'entraînement en rotation de la tête de coupe autour de l'axe, le débouché étant excentré par rapport à l'axe.

Ainsi, en utilisant une installation du type à coupage plasma, qui se compose d'un générateur de courant généralement réglable, dans lequel se trouve le boîtier de commande de coupage plasma, d'un faisceau d'alimentation qui véhicule les fluides nécessaires à l'opération, air comprimé ou autre gaz, ainsi que le courant électrique, on réalise un outil d'appoint composé d'un corps de torche et de pièces d'usure rassemblées sous forme de cartouche.

On a donc réutilisé intégralement le générateur et le faisceau d'alimentation, et c'est sur l'outil de coupage que l'invention a innové.

Selon l'invention, on adapte un corps de torche avec un organe permettant d'animer la tête de coupe d'un mouvement de rotation uniforme, dont la vitesse peut être réglable selon l'épaisseur de la tôle à découper ; une gâchette située sous la poignée permet de choisir le moment du départ et de fin du mouvement de rotation.

Dans une variante automatique de l'outil, le départ et la fin du cycle de coupe, donc de rotation, sont commandés par la détection de l'amorçage et l'extinction de l'arc.

L'alimentation de l'organe permettant d'animer la tête de coupe d'un mouvement de rotation uniforme peut être pneumatique, hydraulique ou électrique.

La tuyère qui coiffe la cartouche porte-électrode a été étudiée de telle sorte que l'arc de coupage plasma sorte selon une direction angulaire par rapport à l'axe du pivot, afin que la tuyère fasse décrire à l'arc une forme de géométrie tronconique qui détermine le diamètre à découper, variable suivant l'angle du conduit de gaz plasmagène par rapport au pivot.

L'extrémité de la tuyère est donc garnie d'un élément conducteur de dureté élevée servant de pivot de centrage et permettant le passage du courant électrique à l'amorçage.

L'intensité de coupe étant variable, à chaque plage d'intensité correspond un diamètre de tuyère adapté.

Selon une forme préférentielle, la réalisation du pistolet comprend un porte-électrode en forme de cartouche solidarisée à l'extrémité d'un arbre rotatif par un doigt tubulaire de verrouillage à rotation communiquant en amont avec un conduit d'alimentation en gaz plasmagène comportant un perçage axial d'arbre et un perçage radial d'arbre, et en aval avec un conduit s'étendant axialement jusqu'au voisinage du porte-électrode et, également de préférence, la tuyère est montée avec débattement axial de verrouillage-déverrouillage dans un étui solidarisé avec l'arbre menant.

D'autres caractéristiques et avantages de l'invention ressortiront de la description qui suit à titre d'exemples en référence aux dessins annexés sur lesquels :

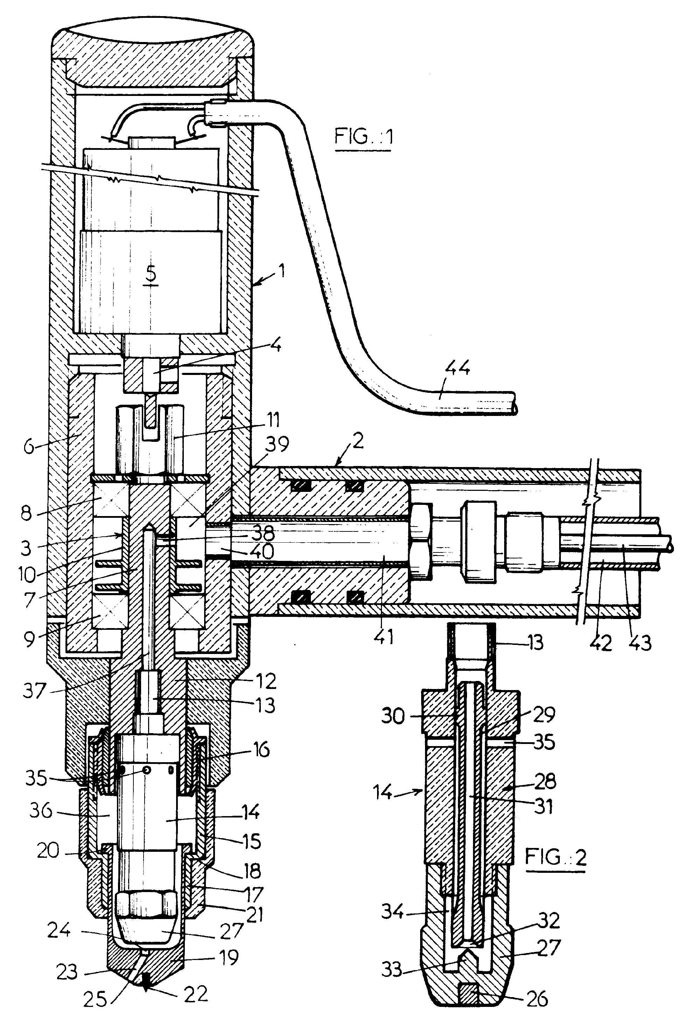

- la figure 1 est une vue en coupe d'un mode de réalisation d'un pistolet de découpage circulaire selon l'invention ; et
- la figure 2 est une vue agrandie, en coupe, de l'ensemble porte-électrode.

En se référant aux dessins annexés, un pistolet de découpage circulaire de tôle comporte, dans un corps de pistolet 1 muni d'une poignée 2, un équipage mobile coaxial 3 entraîné à rotation par un arbre de sortie 4 d'un moteur électrique 5 disposé dans le corps 1.

L'équipage mobile 3, qui est monté dans une enveloppe tubulaire 6, comporte essentiellement un arbre rotatif 7 porté par deux roulements 8 et 9 séparés par une entretoise 10 solidaire de l'arbre 7.

Cet arbre 7 est en prise par une tête de couplage 11 avec l'arbre moteur 4 et son autre extrémité, de forme élargie en 12, est accouplée avec un doigt tubulaire de verrouillage à rotation 13 d'une cartouche porte-électrode 14 placée dans un étui 15 vissé sur un insert annulaire fileté 16 bloqué sur l'extrémité 12 de l'arbre 7. Cet insert annulaire 16 est isolé électriquement de l'extrémité 12.

L'extrémité libre 17 de l'étui 15 a un diamètre plus étroit formant un épaulement 18 de retenue axiale d'une tuyère tubulaire métallique 19 montée à coulissement libre, avec cette particularité que, lorsque la tuyère 19 s'écarte axialement du porte- électrode 14, une collerette de tuyère 20 vient en prise avec l'épaulement 18 sous l'effet de la pression gazeuse (par exemple de l'ordre de 6 x 10⁵ Pa), si bien que la tuyère se trouve alors verrouillée en rotation avec l'étui 17. Un écrou de blocage 21 assure le montage de l'ensemble de la tête de coupe.

La tuyère 19 porte un pivot axial externe 22 à extrémité pointue et un conduit excentré 23 dont une extrémité amont forme un évidement axial 24 et dont un débouché aval 25 est excentré par rapport au pivot axial 22.

L'évidement axial 24 se présente en regard d'une électrode axiale 26 du porte-électrode 14. Ce porte-électrode 14 est composé d'une tête porte-électrode 27, dans laquelle est insérée l'électrode 26, vissée sur un corps de cartouche tubulaire 28, incorporant un insert tubulaire 29, qui présente une portée d'appui 30 pour sa fixation dans le corps de cartouche 28, de façon à former un conduit interne 31, débouchant à une extrémité aval évasée 32 en regard et à faible distance d'un déflecteur massif à effet radial 33 de la tête d'électrode 27, le conduit se poursuivant en un conduit annulaire externe 34 entre porte-électrode 27 et un corps de cartouche 28 d'une part et insert tubulaire 29 d'autre part, pour déboucher à l'extérieur de la cartouche 14 par une pluralité annulaire de trous radiaux 35, aboutissant dans l'espace interstitiel 36 entre cartouche porte-électrode 14 d'une part et extrémité évasée 12 de l'arbre 7, étui 15 et tuyère 19 d'autre part, pour se terminer finalement dans le conduit excentré 23.

A son extrémité amont, le conduit interne 31 de l'insert tubulaire 29 débouche dans le doigt tubulaire de verrouillage 13 qui se présente en prolongement d'un perçage axial 37 de l'arbre 7, qui lui-même communique, par un perçage radial 38 au travers de l'arbre 7 et de l'entretoise 10, avec une chambre annulaire 39 communiquant par un passage radial 40 avec un raccord 41 pour une tubulure 42 d'amenée de gaz plasmagène avantageusement disposée dans la poignée 2, qui incorpore également un fil d'amenée de courant électrique 43 pour la formation du plasma, tandis que le moteur électrique 5 est ici alimenté par un câble externe 44.

En fonctionnement, le pistolet de découpe tenu à la main par la poignée 2 est mis en appui normal par son pivot pointu 22 à l'endroit d'une soudure par point entre deux pièces de tôle. Cet appui provoque le passage de courant entre électrode 26, tuyère 19 et tôles raccordées à la masse, alors que le moteur 5 provoque la rotation de l'équipage mobile 14-19 autour du pivot axial 22. Après un bref laps de temps qui permet l'écoulement gazeux, l'opérateur relâche quelque peu sa pression axiale, ce qui a pour effet de séparer axialement d'une faible distance la cartouche porte-électrode 14 de la tuyère 19, et donc de créer un arc entre l'électrode 26 et tuyère 19 formant ainsi un plasma d'arc qui s'écoule par le conduit excentré 23, alors que la tuyère 19 vient en appui rotatif par son épaulement 20 avec l'étui 17 entraîné en rotation provoquant ainsi en une rotation un perçage de tôle autour du pivot 22.

A titre d'exemples de réalisation, l'énergie qui alimente l'organe de mise en rotation de l'ensemble cartouche peut être de l'un ou l'autre des deux types suivants :

### Energie électrique :

L'énergie électrique utilisée peut être celle du réseau ou bien une énergie autonome par piles ou accumulateurs rechargeables placés dans le pistolet de découpe.

L'organe est alors un moto-réducteur de vitesse réglable dont l'alimentation peut être soit indépendante : elle est alors raccordée au réseau de fourniture en courant électrique de l'atelier ; sot raccordée directement au primaire du transformateur du générateur de soudage ; soit alimentée par la tension de l'arc de coupe (dans ce cas, la rotation de la cartouche ne démarre qu'après l'amorçage de l'arc).

### Energie pneumatique :

L'organe moteur est alors une turbine pneumatique ou un dispositif mécanique qui transforme un mouvement linéaire généré, par exemple par un vérin en mouvement rotatif (rampe hélicoidale). L'alimentation peut être soit indépendante, raccordée au réseau air comprimé de l'atelier, soit raccordée, dans le générateur, en amont ou en aval de l'électrovanne gaz.

L'ensemble mécanique qui permet la rotation de la cartouche porte-électrode et de la tuyère peut être réalisé de deux façons différentes, en ce sens que l'ensemble est supporté par deux paliers à billes, ou bien encore l'ensemble est guidé par des coussinets autolubrifiants.

Le domaine d'application de l'outil, tel que décrit, est pour une grande part la réparation de pièces en tôle, par exemple la réparation des carrosseries automobiles, où il s'agit de déboutonner les tôles des carrosseries à remplacer et d'une façon plus générale, toutes les industries qui assemblent les tôles de fine ou moyenne épaisseur par le procédé de soudure par points.

Cet outil peut aussi être utilisé dans le domaine de la fabrication, car il est possible de découper des formes circulaires de diamètres variés dans la tôle. La cartouche ainsi que les paramètres "vitesse de rotation" et "intensité de coupe" sont adaptés à l'épaisseur à découper. Cet emploi touche toutes les industries de la chaudronnerie ou serrurerie métallique.

## Revendications

1. Pistolet à plasma de découpage de tôle pour réaliser des petites decoupes circulaires, comprenant un corps (1) ayant un axe et supportant coaxialement, à une extrémité, une tête de coupe comportant un ensemble porte-électrode (14) s'étendant dans une tuyère (19) comportant un débouché (25) de gaz plasmagène excentré par rapport à l'axe, le pistolet comprenant dans le corps (1), des moyens d'entraînement en rotation de la tête de coupe autour de l'axe.

2. Pistolet selon la revendication 1, caractérisé en ce que la tête de coupe est montée à une extrémité d'un arbre (7) tourillonnant dans le corps (1).

3. Pistolet selon la revendication 2, caractérisé en ce que la tuyère (19) est montée coulissante axialement par rapport à l'ensemble porte-électrode (14).

4. Pistolet selon l'une des revendications 1 à 3, caractérisé en ce que la tuyère (19) comporte, à son extrémité libre, un pivot d'appui externe (22), coaxial à l'axe.

5. Pistolet selon l'une des revendications 2 à 4, caractérisé en ce que l'arbre (7) comporte un perpage axial (37) communiquant, par au moins un perpage radial (38), avec une chambre annulaire (39) formée dans le corps (1) et dans laquelle débouche (41) un conduit (42) d'alimentation en gaz plasmagène.

6. Pistolet selon la revendication 5, caractérisé en ce que le conduit d'alimentation (42) s'étend dans une poignée (2) de manutention du pistolet.

7. Pistolet selon l'une des revendications 2 à 6, caractérisé en ce que la tuyère (19) est montée à coulissement dans un étui (17) solidarisé à l'arbre (7) et formant conduit de gaz plasmagène.

8. Pistolet selon la revendication 7, caractérisé en ce que la tuyère (19) comporte une collerette d'extrémité (20) coopérant avec un épaulement interne (18) de l'étui (17).

9. Pistolet selon l'une des revendications 1 à 8, caractérisé en ce que les moyens d'entraînement comprennent un moteur électrique (5).

## Patentansprüche

1. Plasmapistole zum Schneiden von Blech zur Erzeugung kleiner kreisförmiger Schnitte, mit einem Gehäuse (1), das eine Achse hat und an einem Ende einen Schneidkopf koaxial trägt, der eine Elektrodenträgereinheit (14) umfaßt, die sich in eine Düse (19) erstreckt, die einen bezüglich der Achse exzentrischen Auslaß (25) für Plasmidgas aufweist, wobei die Pistole in dem Körper (1 eine Einrichtung zum Drehantrieb des Schneidkopfes um die Achse aufweist.

2. Pistole nach Anspruch 1, dadurch gekennzeichnet, daß der Schneidkopf an einem Ende einer in dem Gehäuse drehbar gelagerten Welle (7) montiert ist.

3. Pistole nach Anspruch 2, dadurch gekennzeichnet, daß die Düse (19) bezüglich der Elektrodenträgereinheit (14) axial gleitend gelagert ist.

4. Pistole nach einem der Ansprüche 1 bis 3, dadurch gekennzeichnet, daß die Düse (19) an ihrem freien Ende einen zu der Achse koaxialen äußeren Andruckdrehpunkt (22) aufweist.

5. Pistole nach einem der Ansprüche 2 bis 4, dadurch gekennzeichnet, daß die Welle (7) eine axiale Bohrung (37) aufweist, die über mindestens eine radiale Bohrung (38) mit einer in dem Gehäuse (1) gebildeten kreisringförmigen Kammer (39) in Verbindung steht, in die eine Versorgungsleitung (42) für Plasmidgas mündet (41).

6. Pistole nach Anspruch 5, dadurch gekennzeichnet, daß die Versorgungsleitung (42) sich in einem Griff (2) zur Handhabung der Pistole erstreckt.

7. Pistole nach einem der Ansprüche 2 bis 6, dadurch gekennzeichnet, daß die Düse (19) in einer Hülse (17) gleitend gelagert ist, die mit der Welle (7) verbunden ist und eine Leitung für Plasmidgas bildet.

8. Pistole nach Anspruch 7, dadurch gekennzeichnet, daß die Düse (19) einen Endkragen (20) aufweist, der mit einer inneren Schulter (18) der Hülse (17) zusammenwirkt.

9. Pistole nach einem der Ansprüche 1 bis 8, dadurch gekennzeichnet, daß die Antriebseinrichtung einen Elektromotor (5) aufweist.

## Claims

1. Plasma sheet metal cutting gun for producing small circular cutouts, comprising a body (1) with an axis and supporting coaxially, at one end, a cutting head having an electrode-holder assembly (14) extending into a nozzle (19) having an outlet (25) for plasmagenic gas, off-centre with respect to the axis, the gun comprising means inside the body (1) for rotating the cutting head about the axis.

2. Gun according to Claim 1, characterised in that the cutting head is mounted at one end of a spindle (7) rotating inside the body (1).

3. Gun according to Claim 2, characterised in that the nozzle (19) is mounted so as to slide axially with respect to the electrode-holder assembly (14).

4. Gun according to one of Claims 1 to 3, characterised in that the nozzle (19) has, at its free end, an externally bearing pivot (22), coaxial with the shaft.

5. Gun according to one of Claims 2 to 4, characterised in that the spindle (7) has an axial perforation (37) communicating, through at least one radial perforation (38), with an annular chamber (39) formed in the body (1) and into which a supply pipe (42) for plasmagenic gas opens out (41).

6. Gun according to Claim 5, characterised in that the supply pipe (42) extends in a handle (2) for holding the gun.

7. Gun according to one of Claims 2 to 6, characterised in that the nozzle (19) is mounted so as to slide inside a sheath (17) fixed to the spindle (7) and forming a plasmagenic-gas pipe.

8. Gun according to Claim 7, characterised in that the nozzle (19) has an end collar (20) cooperating with an inner shoulder (18) in the sheath (17).

9. Gun according to one of Claims 1 to 8, characterised in that the drive means comprise an electric motor (5).
